# EUROPEAN PATENT APPLICATION

(11) **EP 4 785 808 A2**
(43) Date of publication of application: **05.08.2026**
(21) Application number: 26178593.5
(22) Date of filing: 19.02.2018
(51) Int. Cl.: A23K 50/60

(54) **ANIMAL FEED ADDITIVE FROM WOOD FOR QUORUM SENSING INHIBITION**

(30) Priority: 23.02.2017 AT 501452017
(62) Divisional of application: 18705927.4
(71) Applicant: Neufeld GmbH, 2392 Grub im Wienerwald (AT); Agromed Austria GmbH, 4550 Kremsmünster (AT); Westerkamp, Arnold, 49429 Visbek (DE)
(72) Inventor: Neufeld, Klaus, deceased (AT); Neufeld, Nina, 2392 Grub im Wienerwald (AT)
(74) Representative: Puchberger & Partner Patentanwälte

(57) **Abstract**

The invention relates to a quorum sensing inhibitor comprising at least one of wood particles from trees and wood particles from lignifying grass, said trees preferably being selected from the family of Pinaceae, Cupressaceae and from Aspen tree and said lignifying grass preferably being selected from the family of Bambusoideae, as feed additive for antibiotic-free prophylaxis of infectious diseases and modulating body temperature under heat stress conditions in farm animals and pets.

## Description

The present invention relates to a quorum sensing inhibitor.

In farm animal production huge quantities of antibiotics have been used as growth promoting additives as well as for therapeutic reasons against pathogenic bacteria. The occurrence of antibiotic resistances resulted in the withdrawal of antibiotic growth promoters in several countries and a restriction in the use of therapeutic antibiotics, both in farm animals and pets. This so-called "demedication process" takes actually place in most European countries but even in areas like South East Asia and Northern and Latin America. The strategy for the future should be to avoid broad misuse of antibiotics in farm animals and pets without the risk of outbreak of detrimental bacterial diseases. Quorum sensing inhibition is one way to reduce pathogenicity of bacteria. Quorum sensing is a cell-to-cell-communication used by bacteria to control the expression of certain genes including virulence genes by producing signal molecules. Disrupting the quorum sensing mechanism of pathogens is an attractive, potential way to control disease outbreaks in farm animals and pets without the need of using antibiotics.

The present invention provides a product with quorum sensing inhibiting activity as feed additive for use in antibiotic-free prophylaxis of infectious diseases in farm animals and pets. The quorum sensing inhibitor of the invention comprises at least one of wood particles from trees and wood particles from lignifying grass. According to one feature of the invention, the trees are selected from the family of Pinaceae, Cupressaceae and from Aspen tree and the lignifying grass is selected from the family of Bambusoideae.

According to another feature of the invention, the quorum sensing inhibitor further comprises an oligomeric procyanidin. In one embodiment, the oligomeric procyanidin comprises four to eight catechin units. In another embodiment, the oligomeric procyanidin comprises more than 8 catechin units. Experiments conducted by the present inventors have shown that using the wood particles in combination with low amounts of an oligomeric procyanidin with 4-8 and/or >8 catechin units significantly improved the effect of the invention.

According to another feature of the invention, the wood particles are presented in fibrillated form, whereas fibrillation means the mechanical size reduction of wood particles to single or aggregated fibril structures. In one embodiment of the invention, the quorum sensing inhibitor comprises fibrillated wood particles in combination with an oligomeric procyanidin.

According to another feature of the invention, the feed additive comprises at least 90 wt% of fibrillated wood particles having a particle size in the range of 50 to 500 µm.

According to another feature of the invention, other preferred compositions can be e.g. mixtures of wood particles from one or more trees from the family of Pinaceae, optionally in combination with wood particles from aspen, cypress and/or bamboo. In one embodiment, any mixture of wood particles may further comprise oligomeric procyanidins.

The present invention also relates to a feed stuff for farm animals and pets, said feed stuff comprising a quorum sensing inhibitor as defined above in a dosage of 0.05%-10% by weight based on total weight of the feed stuff, together with at least one feed component selected from the group consisting of protein substrates, carbohydrate substrates, crude fibre sources, green fodder preserves (silage), fats, vitamins, minerals and trace elements.

The present invention also relates to a premix for preparing the above feed stuff for farm animals and pets. Said premix comprises a quorum sensing inhibitor of the invention together with at least one feed component selected from the group consisting of protein substrates, carbohydrate substrates, crude fibre sources, green fodder preserves (silage), fats, vitamins, minerals and trace elements.

The present invention also relates to the use of the quorum sensing inhibitor as defined above for use in modulating body temperature of farm animals and pets especially under heat stress conditions.

Further, the present invention relates to the use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive for antibiotic-free prophylaxis of infectious diseases in farm animals and pets.

Further, the present invention relates to the use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive for use in modulating body temperature of farm animals and pets especially under heat stress conditions.

Surprisingly the present invention can significantly inhibit quorum sensing communication of pathogenic bacteria like E.coli, Salmonella, Staphylococci, Campylobacter, Streptococci etc. in farm animals and pets. Thus, the feed additive of the present invention exhibits an excellent control against pathogenicity factors of bacteria like enterotoxins, film formation etc. in farm animals and pets and avoids in many cases the outbreak of diseases without the need of using therapeutic antibiotics. This effect is highly interesting especially in antibiotic resistant bacteria like e.g. ESBL bacteria which cannot be influenced by standard antibiotics. On the other hand a product reducing the risk of the outbreak of a bacterial-caused disease without any antimicrobial effect is highly requested as the antimicrobial action of a product does not only destroy pathogenic bacteria but even modulates or destroys the intestinal flora which is important for the organism by producing immune factors, vitamins and valuable metabolites like volatile fatty acids, bacteriocins etc. In summary, it has to be lined out that the present invention does not influence viability of bacteria but inhibits formation of deleterious bacterial metabolites initiated via quorum sensing communication between bacteria during growth phase. This is completely different to the action of antibiotics or antimicrobial substances which are preferably used in farm animal and pets to fight against bacterial diseases.

The present invention will now be described in detail with reference to examples, which are intended to be only illustrative and do not limit the scope of the invention in any way.

### Example 1

In an in vitro test system the effect of the invention was tested with a beta-toxin producing strain of Clostridium perfringens type C. Clostridium perfringens was cultivated in 0.1% glucose-tryptone-salts medium without addition of the test substance (control) or with addition of test substance in various concentrations. The test substance was a quorum sensing inhibitor of the invention comprising a fibrillated product composed of a mixture of wood from spruce and pine tree. Production of beta toxin was evaluated with a commercial immuno-essay kit. The results are presented in Table 1 below.

**Table 1**

| Dosage of test substance | 0 (control) | 0.0001% | 0.001% | 0.01% | 0.1% | 1% |
|---|---|---|---|---|---|---|
| Production of beta toxin | +++ | +++ | ++ | + | - | - |

| | | | | | | |
|---|---|---|---|---|---|---|
| +++ indicates high production; ++ indicates medium production; + indicates low production; - indicates no production of beta toxin. | | | | | | |

### Example 2

In a field study in a commercial piglet farm with evident problems with enterohemorrhagic E.coli infections a number of 360 piglets was divided into 6 groups after weaning. All animals received a commercial standard diet for weaning piglets (Table 2). The "zero control group" received this feed without addition of any therapeutics or additives. For the "antibiotic group" (positive control group) Neomycin was added to the feed in a therapeutic dosage of 10 mg Neomycin sulfate/kg body mass/day "on-top". The four test groups received the weaning diet with an "on-top" addition of various concentrations of the test substance. The test substance was a quorum sensing inhibitor of the invention, comprising a product composed of wood from spruce and pine tree.

**Table 2:**

| | |
|---|---|
| Wheat | 27,40% |
| Barley | 25,00% |
| Corn | 20,00% |
| Soybean meal HP | 16,30% |
| Wheat bran | 5,30% |
| Soybean oil | 1,00% |
| Monocalcium phosphate | 0,70% |
| Calcium carbonate | 0,65% |
| Salt | 0,35% |
| Fish oil | 0,10% |
| Premix, acids | 3,20% |

Incidence of diarrhea was reported for all groups during the test period of 10 days.

In the test an effect of the feed additive of the invention was even evaluated in regard of the body temperature of the animals. The results are presented in Table 3 below.

**Table 3**

| Group | Zero control | Neomycin control | 0.1% test substance | 0.5% test substance | 1.0% test substance | 5.0% test substance |
|---|---|---|---|---|---|---|
| Dosage | --- | 10mg/kg body mass/day | 0.1% | 0.5% | 1.0% | 5.0% |
| Incidence of diarrhea | 78.3% | 56.7% | 53.3% | 26.7% | 18.3% | 15.0% |
| Average body temperature | 39.8°C | 39.6°C | 39.6°C | 39.5°C | 39.5°C | 39.3°C |

As can be seen from Table 3, incidence of diarrhea was significantly reduced in a dose-depending manner in animals receiving the test substance, i.e. the quorum sensing inhibitor of the invention.

Further, the test substance was able to reduce elevated body temperature significantly. Completely surprisingly, in another test system with non-infected animals it was seen that the feed additive of the invention can slightly reduce normal body temperature to a specific extend and especially elevated body temperature under environmental heat stress conditions. This effect is highly interesting as body temperature has a direct influence on body metabolism and energy consumption. Therefore a slight reduction in average body temperature can dramatically decrease energy demand for growth and production. Furthermore the effect of modulating body temperature is highly interesting in farm animals under heat stress conditions often seen in pigs, poultry and even in ruminants, too. Furthermore the seen effect is of interest in pets like dogs especially breeds which are sensitive to high temperature conditions (long-hair breeds in summertime).

### Example 3

In a field study in a commercial breeding farm a number of 50 healthy sows being in the second week of lactation was divided into five groups. All animals received a commercial standard diet for sows (Table 4). The control group received this diet without any additives. The four test groups received the weaning diet with an "on-top" addition of various concentrations of the test substance. The test substance was a quorum sensing inhibitor of the invention, comprising a product composed from a mixture of wood from spruce and pine tree. On the seventh day of trial (third week of lactation) body temperature was measured in all sows (rectal method). Table 5 shows the average body temperature for each group.

**Table 4**

| | |
|---|---|
| Barley | 40% |
| Corn | 11% |
| Wheat | 10% |
| Rape seed and sunflower meal | 11% |
| Wheat meal | 15% |
| Wheat bran | 5% |
| Beet pulp | 5% |
| Mineral premix | 3% |

**Table 5**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 39.7°C | 39.6°C | 39.3°C | 39.3°C | 39.1°C |

### Example 4

In a feeding trial with 250 healthy piglets the invention was tested regarding influence on body temperature. Trial started post-weaning at an age of 12 weeks and lasted for seven days. All piglets received a standard piglet diet (see Example 1, Table 2). The control group received this diet without any additions. The four trial groups received this diet with an "on-top" addition of various concentrations of the test substance. The test substance was a quorum sensing inhibitor of the invention, comprising a product composed of wood from spruce and pine tree. On the seventh day of trial body temperature of all piglets was measured (rectal method). Table 6 shows the average body temperature for each group.

**Table 6**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 39.3°C | 39.3°C | 39.2°C | 39.2°C | 39.0°C |

### Example 5

In a feeding trial with 250 male broilers the invention was tested regarding influence on body temperature under heat stress conditions. The trial started at an age of 21 days. All broilers received a standard broiler diet (Table 7). The control group received this diet without any additions. The four trial groups received this diet with an "on-top" addition of various concentrations of the test substance. The test substance was a quorum sensing inhibitor of the invention, comprising a product composed of wood from spruce and pine tree in combination with an oligomeric procyanidin with 4-8 catechin units in an amount of 0.1 wt%. Broilers were kept at standardized room temperature according to guidelines. On day 28, room temperature in the pens was increased to 36°C for three hours. At the end of this period of heat stress body temperature of all animals was measured by infrared thermometry. Table 8 shows the average body temperature for each group.

**Table 7**

| | |
|---|---|
| Corn | 50% |
| Wheat | 10% |
| Soymeal | 32% |
| Mineral premix | 3% |
| Fat | 5% |

**Table 8**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 43.2°C | 42.8°C | 41.9°C | 41.8°C | 41.3°C |

### Example 6

In a field study in a commercial piglet farm with evident problems with enterohemorrhagic E.coli infections a number of 360 piglets was divided into 6 groups after weaning. All animals received a commercial standard diet for weaning piglets (see Example 1, Table 2). The zero control group received this feed without addition of any therapeutics or additives. For the Neomycin control group Neomycin was added to the feed in a therapeutic dosage of 10 mg Neomycin sulfate/kg body mass/day. The four test groups received the weaning diet with addition of the test substance in various concentrations. In this example, the test substance was a mixture of wood from spruce and pine tree in combination with an oligomeric procyanidin with more than 8 catechin units in an amount of 0.3 wt%. Incidence of diarrhea was reported for all groups during the test period of 10 days. The results are presented in Table 9 below.

**Table 9**

| Group | Zero control | Neomycin control | 0.1% test substance | 0.5% test substance | 1.0% test substance | 5.0% test substance |
|---|---|---|---|---|---|---|
| Dosage | --- | 10 mg/kg body mass/day | 0.1% | 0.5% | 1.0% | 5.0% |
| Incidence of diarrhea | 81.7% | 60% | 38.3% | 21.7% | 15.0% | 11.7% |

As can be seen from Table 9, incidence of diarrhea was significantly reduced in animals receiving the feed additive of the invention. The effect was more pronounced than under the trial conditions shown in Table 3 with a product without a combination with oligomeric procyanidins.

## Claims

1. A quorum sensing inhibitor **characterized in that** it comprises at least one of wood particles from trees and wood particles from lignifying grass, said trees preferably being selected from the family of Pinaceae, Cupressaceae and from Aspen tree and said lignifying grass preferably being selected from the family of Bambusoideae, as feed additive for antibiotic-free prophylaxis of infectious diseases in farm animals and pets.

2. The quorum sensing inhibitor of claim 1 **characterized in that** it comprises any mixture of wood particles selected from wood particles from trees from the family of Pinaceae, wood particles from trees from the family of Cupressaceae, wood particles from Aspen tree, and wood particles from lignifying grass from the family of Bambusoideae.

3. The quorum sensing inhibitor of any of claims 1 or 2 further comprising an oligomeric procyanidin.

4. The quorum sensing inhibitor of claim 3 wherein the oligomeric procyanidin comprises four to eight catechin units.

5. The quorum sensing inhibitor of claim 3 wherein the oligomeric procyanidin comprises more than 8 catechin units.

6. The quorum sensing inhibitor of any of claims 1-5 **characterized in that** the wood particles are fibrillated wood particles.

7. The quorum sensing inhibitor of any of claims 1-6 **characterized in that** it comprises at least 90 wt% of fibrillated wood particles having a particle size between 50 and 500 micrometers.

8. The quorum sensing inhibitor of any of claims 1-7 for use in modulating body temperature of farm animals and pets especially under heat stress conditions.

9. A feed stuff for farm animals and pets **characterized in that** it contains a quorum sensing inhibitor of any of claims 1-8 in a dosage of 0.05%-10% by weight based on total weight of the feed stuff, together with at least one feed component selected from the group consisting of protein substrates, carbohydrate substrates, crude fibre sources, green fodder preserves (silage), fats, vitamins, minerals and trace elements.

10. A premix for preparing the feed stuff of claim 9, comprising a quorum sensing inhibitor of any of claims 1-8 together with at least one feed component selected from the group consisting of protein substrates, carbohydrate substrates, crude fibre sources, green fodder preserves (silage), fats, vitamins, minerals and trace elements.

11. The use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive having quorum sensing inhibiting activity for antibiotic-free prophylaxis of infectious diseases in farm animals and pets.

12. The use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive having quorum sensing inhibiting activity for modulating body temperature of farm animals and pets especially under heat stress conditions.
